(19) Europäisches Patentamt
European Patent Office
Office européen des brevets

(11) **EP 3 597 452 B1**

(12) **EUROPÄISCHE PATENTSCHRIFT**

(45) Veröffentlichungstag und Bekanntmachung des Hinweises auf die Patenterteilung:
**26.08.2020   Patentblatt 2020/35**

(51) Int Cl.:
**B60C 11/24** *(2006.01)*     **B60W 30/095** *(2012.01)*
**B60C 23/06** *(2006.01)*

(21) Anmeldenummer: **19181558.8**

(22) Anmeldetag: **20.06.2019**

(54) **VERFAHREN UND VORRICHTUNG ZUM SCHÄTZEN EINES AKTUELLEN RADUMFANGES MINDESTENS EINES AN EINEM FAHRZEUG ANGEORDNETEN RADES**

METHOD AND DEVICE FOR ESTIMATING A CURRENT CIRCUMFERENCE OF AT LEAST ONE WHEEL LOCATED ON A VEHICLE

PROCÉDÉ ET DISPOSITIF D'ESTIMATION D'UNE CIRCONFÉRENCE DE ROUE ACTUELLE D'AU MOINS UNE ROUE MONTÉE SUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2018   DE 102018211804**

(43) Veröffentlichungstag der Anmeldung:
**22.01.2020   Patentblatt 2020/04**

(73) Patentinhaber: **Volkswagen AG
38440 Wolfsburg (DE)**

(72) Erfinder:
• **Hinz, Olaf**
  **38547 Calberlah (DE)**
• **Hufer, Laurens**
  **38442 Wolfsburg (DE)**
• **Lamping, Roy**
  **38112 Braunschweig (DE)**

(56) Entgegenhaltungen:
EP-A1- 1 403 099     EP-A1- 3 182 063
WO-A1-03/008211     DE-A1-102006 058 567

**Beschreibung**

Die Erfindung betrifft ein Verfahren und eine Vorrichtung zum Schätzen eines aktuellen Radumfanges mindestens eines an einem Fahrzeug angeordneten Rades.

Für den sicheren Betrieb eines Fahrzeugs, insbesondere eines Kraftfahrzeugs, ist es für einen Fahrer und/oder für Assistenzsysteme des Fahrzeugs unerlässlich, einen zuverlässigen Wert für eine aktuelle Geschwindigkeit des Fahrzeugs zu kennen. Hierbei können es gesetzliche Vorgaben verlangen, dass zu keinem Zeitpunkt ein zu kleiner Wert für die Geschwindigkeit angezeigt oder bereitgestellt wird.

In der Regel wird die Geschwindigkeit des Fahrzeugs aus einer an mindestens einem Rad, welches üblicherweise auch als Reifen bezeichnet werden kann, erfassten Raddrehzahl und einem geschätzten Radumfang ermittelt. Der hierbei verwendete Wert für den Radumfang wird über einen Mittelwert der Radumfänge der für das jeweilige Fahrzeug vorgesehenen bzw. zugelassenen Reifentypen berechnet und mit einem zusätzlichen Sicherheitsaufschlag versehen. Dieser Radumfang ist statisch und stets größer als der real vorliegende Radumfang.

Ferner ist es bekannt, einen aktuellen Radumfang unter Berücksichtigung einer geschwindigkeitsbedingten Reifenaufweitung zu schätzen, beispielsweise indem der verwendete Wert für den Radumfang in Abhängigkeit der Geschwindigkeit vergrößert wird.

Da die tatsächliche Reifengröße bzw. der tatsächliche Radumfang unbekannt sind, können diese in den bekannten Verfahren nur unzureichend berücksichtigt werden. So können sich beispielsweise ausgehend von der für ein Fahrzeug vorgesehenen Reifenpalette und von den jeweiligen Reifentoleranzen jeweils Radumfänge ergeben, welche einige Zentimeter auseinanderliegen. Dies führt in der Folge zu starken Abweichungen bei der Berechnung der Geschwindigkeit des Fahrzeugs.

Aus der DE 10 2006 058 567 A1 ist Verfahren und eine Anordnung zur Ermittlung eines aktualisierten Radumfanges zumindest eines an einem Fahrzeug angeordneten Rades bekannt, bei dem dem zumindest einen Rad in einer Steuereinheit zumindest ein Radumfang zugeordnet ist und bei dem abhängig von der Rotationsgeschwindigkeit des zumindest einen Rades und unabhängig von dem zugeordneten Radumfang mittels der Steuereinheit die Radgeschwindigkeit ermittelt wird. Das Verfahren sieht vor, dass eine von der ermittelten Radgeschwindigkeit unabhängige Referenzgeschwindigkeit des Fahrzeuges und/oder des Rades ermittelt wird, die Abweichung der zumindest einen Radgeschwindigkeit von der Referenzgeschwindigkeit bestimmt wird und abhängig von der Abweichung der aktualisierte Radumfang des zumindest einen Rades ermittelt wird.

Der Erfindung liegt die Aufgabe zu Grunde, ein Verfahren und eine Vorrichtung zum Schätzen eines aktuellen Radumfanges mindestens eines an einem Fahrzeug angeordneten Rades zu schaffen, bei denen das Schätzen des aktuellen Radumfanges verbessert durchgeführt werden kann.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zum Schätzen eines aktuellen Radumfanges mindestens eines an einem Fahrzeug angeordneten Rades zur Verfügung gestellt, umfassend die folgenden Schritte:

(a) Ermitteln einer Referenzgeschwindigkeit des Fahrzeugs zu einem Zeitpunkt mittels einer Referenzeinrichtung,
(b) Erfassen einer Raddrehzahl des mindestens einen Rades zu dem Zeitpunkt mittels eines Raddrehzahlsensors,
(c) Schätzen eines Radumfangseinzelwertes auf Grundlage der ermittelten Referenzgeschwindigkeit und der erfassten Raddrehzahl für den Zeitpunkt mittels einer Berechnungseinrichtung,
(d) Ablegen zumindest des geschätzten Radumfangseinzelwertes in einem Ringspeicher für den Zeitpunkt,
(e) Wiederholen der Schritte (a) bis (d) für mindestens einen weiteren Zeitpunkt,

Schätzen eines aktuellen Radumfanges auf Grundlage der im Ringspeicher hinterlegten Radumfangseinzelwerte mittels der Berechnungseinrichtung und Ausgeben des geschätzten aktuellen Radumfanges als Radumfangssignal.

Ferner wird eine Vorrichtung zum Schätzen eines aktuellen Radumfanges mindestens eines an einem Fahrzeug angeordneten Rades geschaffen, umfassend eine Eingangseinrichtung, eine Berechnungseinrichtung, einen Ringspeicher, und eine Ausgangseinrichtung. Die Eingangseinrichtung ist dazu eingerichtet, eine ermittelte Referenzgeschwindigkeit des Fahrzeugs zu mindestens einem Zeitpunkt von einer Referenzeinrichtung zu empfangen und eine Raddrehzahl des mindestens einen Rades zu dem mindestens einen Zeitpunkt von einem Raddrehzahlsensor zu empfangen. Die Berechnungseinrichtung ist dazu eingerichtet, einen Radumfangseinzelwert auf Grundlage der empfangenen Referenzgeschwindigkeit und der empfangenen Raddrehzahl für den mindestens einen Zeitpunkt zu schätzen und zumindest den geschätzten Radumfangseinzelwert in dem Ringspeicher zu hinterlegen. Die Berechnungseinrichtung ist ferner dazu eingerichtet, einen aktuellen Radumfang auf Grundlage von im Ringspeicher für mehrere Zeitpunkte hinterlegten Radumfangseinzelwerten zu schätzen. Die Ausgangseinrichtung ist dazu eingerichtet, den geschätzten aktuellen Radumfang als Radumfangssignal auszugeben.

Eine Grundidee der Erfindung ist es, für mehrere Zeitpunkte jeweils einen Radumfangseinzelwert, d.h. einen Wert für den Radumfang des mindestens einen Rades zu einem Zeitpunkt, zu schätzen. Die jeweilige Schätzung wird hierbei mittels einer Berechnungseinrichtung auf Grundlage der jeweils für einen Zeitpunkt ermittelten bzw. empfangenen Referenzgeschwindigkeit des Fahrzeugs und der für den Zeitpunkt erfassten bzw. empfangenen Raddrehzahl durchgeführt, indem die Referenzgeschwindigkeit durch die Raddrehzahl dividiert wird. Die Referenzgeschwindigkeit bezeichnet hierbei eine Geschwindigkeit, die unabhängig von einer Raddrehzahl, einem Radumfang und/oder einer Rotationsgeschwindigkeit des mindestens einen Rades ermittelt wurde. Ein Ringspeicher wird nach einem Start einer Fahrt auf diese Weise sukzessive mit Werten gefüllt. Beispielsweise können im Sekundentakt neue Werte hinzugeführt werden. Sind alle Speicherplätze des Ringspeichers belegt, so werden die ältesten Werte verworfen und durch aktuelle Werte ersetzt. Umfasst der Ringspeicher beispielsweise 30 Speicherplätze für die Radumfangseinzelwerte und wird im Sekundentakt ein aktueller Radumfangseinzelwert hinzugefügt, so umfasst der Ringspeicher insgesamt Werte für einen Zeitraum von 30 Sekunden. Ein aktueller Radumfang wird auf Grundlage dieser im Ringspeicher hinterlegten Radumfangseinzelwerte mittels der Berechnungseinrichtung geschätzt und anschließend als Radumfangssignal ausgegeben. Dieses Radumfangssignal kann sowohl analog als auch digital, beispielsweise in Form eines entsprechenden Datenpakets, ausgegeben werden.

Es kann vorgesehen sein, dass eine aktuelle Geschwindigkeit des Fahrzeugs auf Grundlage des Radumfangssignals geschätzt wird. Hierzu wird der im Radumfangssignal kodierte aktuelle Radumfang mit einer aktuellen Raddrehzahl multipliziert. Das Ergebnis ergibt eine Schätzung für die aktuelle Geschwindigkeit des Fahrzeugs.

Das erfindungsgemäße Verfahren und die erfindungsgemäße Vorrichtung haben den Vorteil, dass ein aktueller Radumfang verbessert geschätzt werden kann und insbesondere dynamische Effekte, bei denen sich der Radumfang ändert, beispielsweise eine Beschleunigung, eine erhöhte Geschwindigkeit, ein fortschreitender Abrieb des Reifens und/oder einer Reifenaufweitung, verbessert berücksichtigt werden können. Das Verfahren und die Vorrichtung ermöglichen das Bereitstellen einer verbesserten Schätzung der Geschwindigkeit über den geschätzten aktuellen Radumfang und die Raddrehzahl, welche auch den gehobenen Anforderungen des European New Car Assessment Programme (Euro-NCAP) gerecht werden kann.

Die Referenzeinrichtung kann beispielsweise ein globales Navigationssatellitensystem (GNSS) sein, beispielsweise NAVSTAR GPS (USA), GLONASS (Russland), Galileo (Europa) oder Beidou (China). Zum Ermitteln der Referenzgeschwindigkeit wird ein zugehöriges Signal des globalen Navigationssatellitensystems empfangen und ausgewertet. Die ermittelte Referenzgeschwindigkeit wird dann an die Eingangseinrichtung bzw. die Berechnungseinrichtung übermittelt. Vorzugsweise wird die Referenzgeschwindigkeit hierbei mittels Dopplereffekt berechnet.

Alternativ oder zusätzlich kann die Referenzeinrichtung auch ein Lasersystem, eine Radareinrichtung oder eine Kamera sein, welche dazu eingerichtet sind, eine aktuelle Referenzgeschwindigkeit des Fahrzeugs zu bestimmen und bereitzustellen. Es kann auch vorgesehen sein, mehrere Referenzeinrichtungen zu verwenden und die jeweils ermittelten Referenzgeschwindigkeiten dieser Referenzeinrichtungen miteinander zu einer Referenzgeschwindigkeit zu fusionieren.

Die Raddrehzahl wird von einem Raddrehzahlsensor erfasst und als Raddrehzahlsignal der Eingangseinrichtung bzw. der Berechnungseinrichtung zugeführt. Die Raddrehzahl kann auch indirekt von einer Fahrdynamikregelung (z.B. Electronic Stability Control, ESC) des Fahrzeugs bereitgestellt bzw. bei dieser abgefragt werden.

Es kann ferner vorgesehen sein, dass nicht nur die Radumfangseinzelwerte in dem Ringspeicher hinterlegt werden, sondern auch die jeweils zu einem Radumfangseinzelwert gehörende Referenzgeschwindigkeit und Raddrehzahl.

In einer Ausführungsform ist vorgesehen, dass das Schätzen des aktuellen Radumfanges auf Grundlage eines gewichteten Mittelwertes der im Ringspeicher hinterlegten Radumfangseinzelwerte erfolgt. Im einfachsten Fall kann die Gewichtung für jeden der Radumfangseinzelwerte gleich sein. Es kann jedoch auch vorgesehen sein, dass die Gewichtung für die einzelnen Radumfangseinzelwerte unterschiedliche ist. Beispielsweise können ältere Radumfangseinzelwerte geringer gewichtet werden als aktuellere Radumfangseinzelwerte.

In einer Ausführungsform ist vorgesehen, dass jeweils eine Gültigkeit der Referenzgeschwindigkeit und der Raddrehzahl überprüft wird, wobei das Schätzen und Ablegen des Radumfangseinzelwertes für einen Zeitpunkt nur erfolgt, wenn die Referenzgeschwindigkeit und die Raddrehzahl für den Zeitpunkt gültig sind. Als gültig beurteilt werden die Referenzgeschwindigkeit und die Raddrehzahl beispielsweise, wenn ein daraus geschätzter Radumfangseinzelwert innerhalb eines vorgegebenen Toleranzbereichs liegt. Dieser Toleranzbereich ist beispielsweise wie folgt definiert: Ein maximaler Wert wird auf Grundlage des Radumfangs des größten für das Fahrzeug vorgesehenen bzw. zugelassenen Reifen geschätzt. Auf diese Schätzung wird zusätzlich ein Toleranzaufschlag von beispielsweise 1,5 % vorgenommen. Das Ergebnis bildet die obere Grenze für den Bereich, in dem ein geschätzter Radumfangseinzelwert liegen muss. Die untere Grenze dieses Bereichs wird entsprechend auf Grundlage des Radumfangs des kleinsten vorgesehenen bzw. zugelassenen Reifens, verringert um einen Toleranzabschlag von beispielsweise 2,5 %, gebildet. Liegt der geschätzte Radumfangseinzelwert innerhalb dieses Bereichs, so wird das Datenpaar aus Referenzgeschwindigkeit und Raddrehzahl als gültig erachtet, anderenfalls wird das Datenpaar verworfen.

Es kann ferner vorgesehen sein, dass die Gültigkeit auf Grundlage weiterer Parameter der Referenzgeschwindigkeit und/oder der Raddrehzahl bestimmt wird. Dies können z.B. eine Auflösung, ein Verzug, ein Alter, eine Güte oder eine Restfehlerwahrscheinlichkeit des entsprechenden Messwertes für die Referenzgeschwindigkeit und/oder der Raddrehzahl sein. Bei der Raddrehzahl können auch ein aktuell gemessener Schlupf, eine Neigung, eine Querbeschleunigung, eine Längsbeschleunigung, ein Lenkwinkel und/oder Regeleingriffe einer Bremse berücksichtigt werden.

In einer weiteren Ausführungsform ist vorgesehen, dass eine Güte der im Ringspeicher abgelegten Radumfangseinzelwerte bestimmt wird. Eine solche Güte für jeden der Radumfangseinzelwerte kann anschließend beispielsweise bei einer Gewichtung berücksichtigt werden.

In einer weiterbildenden Ausführungsform ist vorgesehen, dass die Güte jeweils in Abhängigkeit eines Alters der Radumfangseinzelwerte in dem Ringspeicher bestimmt wird. Insbesondere kann vorgesehen sein, dass eine Güte eines Radumfangseinzelwerts im Ringspeicher mit zunehmenden Alter verringert wird, sodass der aktuell hinzugefügte Radumfangseinzelwert eine größere Güte aufweist.

In einer weiteren weiterbildenden Ausführungsform ist vorgesehen, dass die Güte jeweils in Abhängigkeit der jeweils zu den Radumfangseinzelwerten gehörenden ermittelten Referenzgeschwindigkeit bestimmt wird. Auf diese Weise kann berücksichtigt werden, dass eine Referenzgeschwindigkeit sich in bestimmten Geschwindigkeitsbereichen besonders zuverlässig bestimmen lässt, in anderen hingegen nur weniger zuverlässig. So hat sich beispielsweise gezeigt, dass eine mittels eines GNSS bestimmte Referenzgeschwindigkeit im Bereich zwischen 20 km/h und 120 km/h zuverlässiger bestimmt werden kann als bei darunter oder darüber liegenden Geschwindigkeiten. Die Güte kann beispielsweise in Abhängigkeit der Geschwindigkeit in Form einer Kennlinie definiert werden.

Es kann vorgesehen sein, dass die Güte in Abhängigkeit weiterer Parameter bestimmt wird. Ein solcher Parameter kann beispielsweise eine Güte der Referenzgeschwindigkeit bzw. der Referenzeinrichtung sein, beispielsweise eine Güte des von einem GNSS gelieferten Signals. Auch eine Geschwindigkeitsänderung, eine Beschleunigung und/oder eine Dauer einer Beschleunigungsphase zum betrachteten Zeitpunkt können mit in die Güte einfließen.

Beispielsweise können die Radumfangseinzelwerte beim Schätzen des aktuellen Radumfangs jeweils mit ihrer Güte gewichtet werden, wobei dann noch eine Normierung des Ergebnisses vorgenommen werden muss.

In einer Ausführungsform ist vorgesehen, dass eine Gesamtgüte des Ringspeichers bestimmt wird, wobei das Schätzen des aktuellen Radumfangs zusätzlich auf Grundlage der bestimmten Gesamtgüte des Ringspeichers erfolgt. Die Gesamtgüte berechnet sich beispielsweise auf Grundlage einer Summe der einzelnen Güten der Radumfangseinzelwerte im Ringspeicher. Die Summe wird durch eine maximal mögliche Güte normiert, indem die Summe der Güten durch die maximal mögliche Güte dividiert wird. Die Gesamtgüte des Ringspeichers ist ein Maß dafür, wie zuverlässig ein geschätzter aktueller Radumfang ist.

In einer weiterbildenden Ausführungsform ist vorgesehen, dass das Schätzen des aktuellen Radumfangs auf Grundlage einer Kennlinie erfolgt, wobei die Kennlinie eine Gewichtung zwischen einem auf Grundlage der im Ringspeicher hinterlegten Radumfangseinzelwerte geschätzten Radumfang und einem Rückfallradumfang in Abhängigkeit der Gesamtgüte des Ringspeichers definiert. Dies hat den Vorteil, dass ein Anlernen und ein Verlernen eines Radumfangs ermöglicht wird. Stehen beispielsweise Referenzgeschwindigkeiten zur Verfügung, um den Ringspeicher mit Radumfangseinzelwerten zu füllen, dann kann ausgehend von dem Rückfallradumfang ein verbesserter Radumfang angelernt werden. Stehen dann zu einem späteren Zeitpunkt keine Referenzgeschwindigkeiten mehr zur Verfügung, beispielsweise weil die Referenzeinrichtung kein Signal mehr liefert oder dieses nur über eine unzureichende Güte verfügt, dann wird der Radumfang wieder schrittweise auf den Rückfallradumfang zurückgeführt, d.h. ein geschätzter Radumfang wird schrittweise wieder verlernt. Hierdurch kann erreicht werden, dass auch bei einem Ausfall der Referenzeinrichtung, beispielsweise einem GNSS, ein zulässiger Wert für den Radumfang gewählt wird, der jederzeit die geforderten Vorgaben einhält.

Die einzelnen Gewichtungen lassen sich beispielsweise über eine gesamtgüteabhängige Koeffizientenkennlinie definieren. Der aktuelle Radumfang kann dann wie folgt geschätzt werden:

Aktueller Radumfang = (Koeffizient aus Kennlinie)

\* (über Radumfangseinzelwerte geschätzter Radumfang)

+ (1 – Koeffizient aus Kennlinie) \* Rückfallradumfang

Über einen Verlauf der Kennlinie kann ein Lern- und Verlernverhalten des Verfahrens bzw. der Vorrichtung beim Schätzen des aktuellen Radumfangs beeinflusst werden. Beispielsweise kann durch die Kennlinie eingestellt sein, dass sich der Wert für den geschätzten aktuellen Radumfang im Bereich einer geringen Gesamtgüte des Ringspeichers nur sehr langsam von dem Rückfallradumfang wegbewegen kann. Im Bereich größerer Gesamtgüte des Ringspeichers kann die Gewichtung hingegen derart gewählt sein, dass sich der aus den hinterlegten Radumfangseinzelwerten geschätzte aktuelle Radumfang deutlich schneller von dem Rückfallradumfang entfernen kann.

Es kann auch vorgesehen sein, dass das Lern- und Verlernverhalten von anderen bzw. weiteren Größen abhängt. So kann beispielsweise vorgesehen sein, dass ein Verlernen des Radumfangs erfolgt, wenn eine bestimmte Neigung gemessen wird. Auch kann ein Verlernen während einer Durchfahrt durch einen Tunnel erfolgen.

In einer weiteren Ausführungsform ist vorgesehen, dass zusätzlich die zugehörige ermittelte Referenzgeschwindigkeit zu einem jeweiligen Zeitpunkt in dem Ringspeicher hinterlegt wird, wobei das Schätzen des aktuellen Radumfanges ausschließlich auf Grundlage derjenigen Radumfangseinzelwerte in dem Ringspeicher erfolgt, deren zugehörige Referenzgeschwindigkeiten mit einem Geschwindigkeitsbereich korrespondieren, in dem eine Geschwindigkeit des Fahrzeugs zu einem aktuellen Zeitpunkt liegt. Hierdurch kann erreicht werden, dass der aktuelle Radumfang verbessert geschätzt wird, da dieser speziell für einen bestimmten Geschwindigkeitsbereich geschätzt werden kann.

Es kann vorgesehen sein, das Verfahren nicht nur für ein Rad des Fahrzeug, sondern für mindestens ein weiteres Rad oder sogar alle Räder des Fahrzeugs durchzuführen. Das Verfahren liefert dann zu jedem der Räder einen zugehörigen geschätzten aktuellen Radumfang.

Es kann vorgesehen sein, dass der geschätzte aktuelle Radumfang bzw. das Radumfangssignal vor dem Ausgeben bzw. Bereitstellen hinsichtlich einer Änderungsrate begrenzt wird, beispielsweise auf eine maximale Änderungsrate von 20 mm/s. Hierdurch kann eine zu schnelle Änderung des geschätzten Radumfangs unterbunden werden.

Die einzelnen Ausführungsformen des Verfahrens lassen sich entsprechend in der Vorrichtung umsetzen, wobei die Vorrichtung jeweils dazu eingerichtet ist, das entsprechende Verfahren durchzuführen. Die Vorteile entsprechender Ausführungsformen der Vorrichtung sind hierbei die gleichen wie entsprechende Ausführungsformen des Verfahrens.

Nachfolgend wird die Erfindung anhand bevorzugter Ausführungsbeispiele unter Bezugnahme auf die Figuren näher erläutert. Hierbei zeigen:

Fig. 1     eine schematische Darstellung einer Ausführungsform der Vorrichtung zum Schätzen eines aktuellen Radumfanges eines an einem Fahrzeug angeordneten Rades;

Fig. 2     eine Kennlinie zur Bestimmung der Güte in Abhängigkeit des Alters eines Radumfangseinzelwertes im Ringspeicher;

Fig. 3     eine Kennlinie zur Bestimmung der Güte in Abhängigkeit der Referenzgeschwindigkeit;

Fig. 4     eine Kennlinie zum Bestimmen einer Gewichtung in Abhängigkeit einer Gesamtgüte des Ringspeichers;

Fig. 5     ein schematischer zeitlicher Verlauf eines geschätzten aktuellen Radumfangs zum Verdeutlichen des Verfahren insbesondere in Hinblick auf ein Anlern- und Verlernverhalten;

Fig. 6     ein schematisches Signalflussdiagramm einer Ausführungsform des Verfahrens zum Schätzen eines aktuellen Radumfanges mindestens eines an einem Fahrzeug angeordneten Rades.

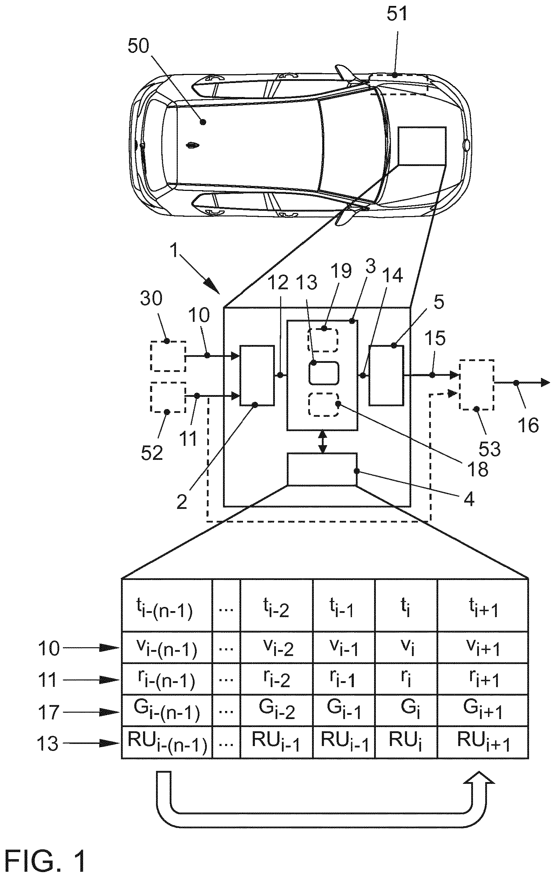

Fig. 1 zeigt eine schematische Darstellung einer Ausführungsform der Vorrichtung 1 zum Schätzen eines aktuellen Radumfanges 14 eines an einem Fahrzeug 50 angeordneten Rades 51. Die Vorrichtung 1 umfasst eine Eingangseinrichtung 2, eine Berechnungseinrichtung 3, einen Ringspeicher 4 und eine Ausgangseinrichtung 5.

Die Eingangseinrichtung 2 empfängt eine von einer Referenzeinrichtung 30 ermittelte und bereitgestellte Referenzgeschwindigkeit 10 des Fahrzeugs 50. Die Referenzeinrichtung 30 kann beispielsweise ein GNSS sein. Ferner empfängt die Eingangseinrichtung 2 eine Raddrehzahl 11 des Rades 51 des Fahrzeugs. Die Raddrehzahl 11 wird von einem Raddrehzahlsensor (nicht gezeigt) erfasst und beispielsweise von einer Fahrdynamiksteuerung 52 (ESC) des Fahrzeugs 50 als entsprechendes Signal bereitgestellt. Die Eingangseinrichtung 2 synchronisiert die Referenzgeschwindigkeit 10 und die Raddrehzahl 11 hinsichtlich ihrer Zeitbasis, so dass Datenpaare der Referenzgeschwindigkeit 10 und der Raddrehzahl 11 sich auf den gleichen Zeitpunkt beziehen. Die gebildeten Datenpaare 12 werden der Berechnungseinrichtung 3 zugeführt.

Die Berechnungseinrichtung 3 schätzt zu dem Datenpaar 12 einen Radumfangseinzelwert 13 auf Grundlage der empfangenen Referenzgeschwindigkeit 10 und der empfangenen Raddrehzahl 11 für den zugehörigen Zeitpunkt (in Fig. 1 mit dem Index i bezeichnet). Der geschätzte Radumfangseinzelwert 13 wird anschließend von der Berechnungseinrichtung 3 für den Zeitpunkt in dem Ringspeicher 4 hinterlegt.

Dies wird für weitere Datenpaare 12 bzw. weitere Zeitpunkte durchgeführt und hierdurch der Ringspeicher 4 mit geschätzten Radumfangseinzelwerten 13 gefüllt. Beispielsweise kann vorgesehen sein, dass im Sekundentakt aktuelle geschätzte Radumfangseinzelwerte 13 in dem Ringspeicher 4 hinterlegt werden. Umfasst der Ringspeicher 4 beispielsweise 30 Speicherplätze, so werden hierdurch Werte fortlaufend für die jeweils letzten 30 Sekunden gespeichert.

Die Berechnungseinrichtung 3 schätzt einen aktuellen Radumfang 14 auf Grundlage der im Ringspeicher 4 für die mehreren Zeitpunkte hinterlegten Radumfangseinzelwerte 13.

Es kann vorgesehen sein, dass das Schätzen des aktuellen Radumfanges 14 beispielsweise auf Grundlage eines gewichteten Mittelwertes der im Ringspeicher 4 hinterlegten Radumfangseinzelwerte 13 erfolgt.

Die Ausgangseinrichtung 5 gibt den geschätzten aktuellen Radumfang 14 anschließend als Radumfangssignal 15 aus. Dieses Radumfangssignal 15 kann sowohl analog als auch digital, beispielsweise in Form eines entsprechenden Datenpakets, ausgebildet sein. Auf Grundlage des aktuellen Radumfangs 14 bzw. des Radumfangssignals 15 kann insbesondere eine aktuelle Geschwindigkeit 16 des Fahrzeugs 50 berechnet werden, indem der aktuelle Radumfang 14 bzw. das Radumfangssignal 15 mit der Raddrehzahl 11 multipliziert wird, beispielsweise in einer Steuerung 53 des Fahrzeugs 50.

Es kann vorgesehen sein, dass jeweils eine Gültigkeit der Referenzgeschwindigkeit 10 und der Raddrehzahl 11 überprüft wird, wobei das Schätzen und Ablegen des Radumfangseinzelwertes 13 für einen Zeitpunkt nur erfolgt, wenn die Referenzgeschwindigkeit 10 und die Raddrehzahl 11 für den Zeitpunkt gültig sind. Gültig sind die Referenzgeschwindigkeit 10 und die Raddrehzahl 11 beispielsweise, wenn der daraus berechnete Radumfangseinzelwert 13 innerhalb eines vorgegebenen Bereichs liegt.

Es kann vorgesehen sein, dass eine Güte 17 der im Ringspeicher 4 abgelegten Radumfangseinzelwerte 13 bestimmt wird. Diese Güte 17 kann beispielsweise Ausgangspunkt für die Wahl der Gewichtungen der Radumfangseinzelwerte 13 beim Schätzen des aktuellen Radumfangs 14 sein.

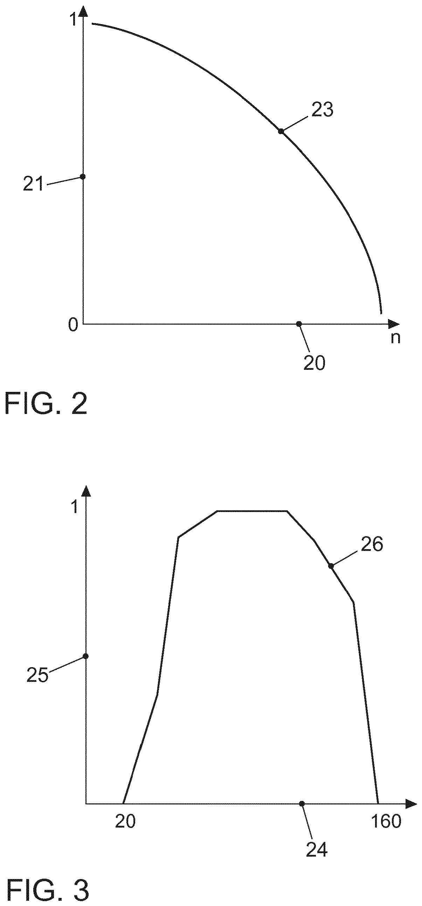

Hierbei kann vorgesehen sein, dass die Güte 17 jeweils in Abhängigkeit eines Alters der Radumfangseinzelwerte 13 in dem Ringspeicher 4 bestimmt wird. Eine Kennlinie zur Bestimmung der Güte 17 in Abhängigkeit des Alters ist beispielsweise in Fig. 2 dargestellt. Auf der x-Achse 20 ist das Alter, d.h. die zeitliche Position, des betrachteten Radumfangseinzelwertes 13 im Ringspeicher 4 dargestellt. Das Alter kann maximal den Wert annehmen, der einer Anzahl n der Speicherplätze im Ringspeicher 4 entspricht. Die y-Achse 21 zeigt die Güte 17, welche dem entsprechenden Alter zugeordnet ist. Man erkennt anhand der dargestellten Kurve 22, dass die Güte 17 in diesem Beispiel mit dem Alter immer stärker abnimmt.

Alternativ oder zusätzlich kann vorgesehen sein, dass die Güte 17 jeweils in Abhängigkeit der jeweils zu den Radumfangseinzelwerten 13 gehörenden ermittelten Referenzgeschwindigkeit 10 bestimmt wird. Eine Kennlinie zur Bestimmung der Güte 17 in Abhängigkeit der Referenzgeschwindigkeit 10 ist beispielsweise in Fig. 3 dargestellt. Auf der x-Achse 24 ist die Referenzgeschwindigkeit 10 des Fahrzeugs 50 in km/h dargestellt. Die y-Achse 25 zeigt die Güte 17, welche der entsprechenden Referenzgeschwindigkeit 10 zugeordnet ist. Die in Fig. 3 beispielhaft dargestellte Kurve 26 berücksichtigt insbesondere, dass die Güte 17 unterhalb einer Geschwindigkeit von 20 km/h und oberhalb von 160 km/h stark abnimmt. Dies ist beispielsweise bei einer mittels eines GNSS bereitgestellten Referenzgeschwindigkeit 10 der Fall.

Wird die Güte 17 in Abhängigkeit von mehreren Parametern bestimmt, so werden die entsprechenden Werte miteinander multipliziert.

Es kann vorgesehen sein, dass eine Gesamtgüte 18 des Ringspeichers 4 von der Berechnungseinrichtung 3 bestimmt wird, wobei das Schätzen des aktuellen Radumfangs 14 zusätzlich auf Grundlage der bestimmten Gesamtgüte 18 des Ringspeichers 4 erfolgt. Ist eine maximale Güte 17 der einzelnen Radumfangseinzelwerte 13 beispielsweise jeweils gleich 1 und umfasst der Ringspeicher 4 beispielsweise 30 Speicherplätze, so kann die Gesamtgüte 18 ohne erneute Normierung maximal den Wert 30 annehmen.

Weiter kann vorgesehen sein, dass das Schätzen des aktuellen Radumfangs 14 auf Grundlage einer Kennlinie erfolgt, wobei die Kennlinie eine Gewichtung zwischen einem auf Grundlage der im Ringspeicher 4 hinterlegten Radumfangseinzelwerte 13 geschätzten Radumfang und einem Rückfallradumfang 19 in Abhängigkeit der Gesamtgüte 18 des Ringspeichers 4 definiert. Der Rückfallradumfang 19 ist hierbei insbesondere ein gesetzlich vorgeschriebener Wert für den Radumfang. Der Wert wird auf Grundlage eines aus den für das Fahrzeug 50 vorgesehenen Reifen gemittelten Radumfangs gebildet, wobei zu dem Ergebnis noch eine Sicherheitsmarge von beispielsweise 4 % hinzuaddiert wird.

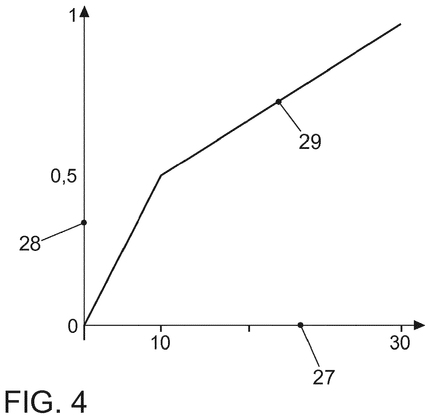

Eine hierzu beispielhafte Kennlinie ist in Fig. 4 gezeigt. Auf der x-Achse 27 ist die für den Ringspeicher 4 zu einem aktuellen Zeitpunkt bestimmte Gesamtgüte 18 aufgetragen. Die y-Achse 28 zeigt einen Gewichtungskoeffizienten, der eine Gewichtung zwischen dem auf Grundlage der im Ringspeicher 4 hinterlegten Radumfangseinzelwerte 13 geschätzten Radumfang und einem Rückfallradumfang 19 definiert. Je größer der Wert der Gewichtung, desto stärker werden die Radumfangseinzelwerte 13 im Ringspeicher berücksichtigt; je kleiner der Wert der Gewichtung, desto stärker entspricht der geschätzte aktuelle Radumfang 14 dem Rückfallradumfang 19. Über die Kennlinie kann festgelegt werden, wie stark ein Anlernen und Verlernen des aktuellen Radumfangs 14 in Bezug auf den konstanten Rückfallradumfang 19 erfolgt. Der aktuelle Radumfang 14 berechnet sich dann insbesondere auf Grundlage folgender Gleichung:

$$\text{Aktueller Radumfang} = (\text{Koeffizient aus Kennlinie})$$
$$* (\text{über Radumfangseinzelwerte geschätzter Radumfang})$$
$$+ (1 - \text{Koeffizient aus Kennlinie}) * \text{Rückfallradumfang}$$

Beträgt die Gesamtgüte beispielsweise 10, so lässt sich aus der Kennlinie in Fig. 4 ein Koeffizient von 0,5 ablesen. Dies heißt, dass der auf Grundlage der im Ringspeicher 4 hinterlegten Radumfangseinzelwerte 13 geschätzte Radumfang und der Rückfallradumfang 19 jeweils zur Hälfte in den Wert für den geschätzten aktuellen Radumfang 14 eingehen.

Es kann vorgesehen sein, dass zusätzlich die zugehörige ermittelte Referenzgeschwindigkeit 10 zu einem jeweiligen Zeitpunkt in dem Ringspeicher 4 hinterlegt wird, wobei das Schätzen des aktuellen Radumfanges 14 ausschließlich auf Grundlage derjenigen Radumfangseinzelwerte 13 in dem Ringspeicher 4 erfolgt, deren zugehörige Referenzgeschwindigkeiten 10 mit einem Geschwindigkeitsbereich korrespondieren, in dem eine Geschwindigkeit des Fahrzeugs 50 zu einem aktuellen Zeitpunkt liegt. Dies ermöglicht eine verbesserte Schätzung des aktuellen Radumfangs 14, da nur Radumfangseinzelwerte 13 eines zugehörigen Geschwindigkeitsbereichs berücksichtigt werden.

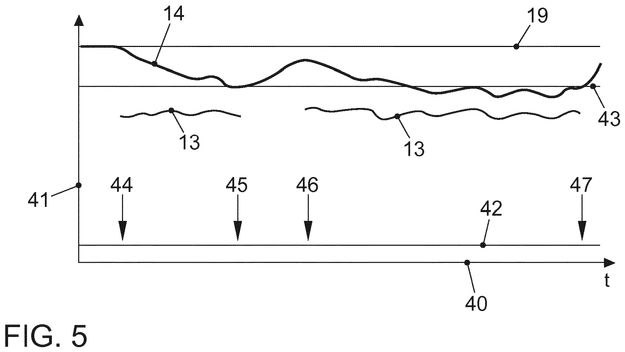

In Fig. 5 ist ein zeitlicher Verlauf eines geschätzten aktuellen Radumfangs 14 zum Verdeutlichen des Verfahren, insbesondere in Hinblick auf ein Anlern- und Verlernverhalten des aktuellen Radumfangs 14, dargestellt. Auf der x-Achse 40 ist die Zeit dargestellt, auf der y-Achse 41 der mittels des Verfahrens bzw. der Vorrichtung (vgl. Fig. 1) geschätzte aktuelle Radumfang 14. In der Darstellung sind ein Minimalwert 42, ein Maximalwert 43 und der Rückfallradumfang 19 eingezeichnet.

Der Minimalwert 42 wird auf Grundlage des Radumfangs des kleinsten vorgesehenen bzw. zugelassenen Rades, verringert um einen Toleranzabschlag von 2,5 %, gebildet. Der Maximalwert 43 wird auf Grundlage des Radumfangs des größten für das Fahrzeug vorgesehenen bzw. zugelassenen Reifen geschätzt. Auf diese Schätzung wird ein Toleranzaufschlag von 1,5 % vorgenommen. Der Rückfallradumfang 19 wird auf Grundlage eines aus den für das Fahrzeug 50 vorgesehenen Reifen gemittelten Radumfangs gebildet, wobei zu dem Ergebnis noch eine Sicherheitsmarge von 4 % des Ergebnisses hinzuaddiert wird.

Nachfolgend wird beispielhaft ein Zeitverlauf des geschätzten aktuellen Radumfangs 14 beschrieben. Zu Beginn wird das Fahrzeug und das Verfahren gestartet. Der geschätzte aktuelle Radumfang 14 entspricht dann dem Rückfallradumfang 19, da der Ringspeicher noch nicht mit einer ausreichenden Anzahl von geschätzten Radumfangseinzelwerten gefüllt ist. Zu einem Zeitpunkt 44 liefert die Referenzeinrichtung, beispielsweise ein GNSS, erste Werte für eine Referenzgeschwindigkeit, sodass über die Referenzgeschwindigkeit und die Raddrehzahl Radumfangseinzelwerte 13 geschätzt werden können. Die Radumfangseinzelwerte 13 liegen unterhalb des geschätzten aktuellen Radumfangs 14. Da der Ringspeicher sich sukzessive mit weiteren Werten füllt, steigt seine Gesamtgüte an. Dies führt dazu, dass der über die im Ringspeicher hinterlegten Radumfangseinzelwerte 13 geschätzte (gemittelte) Radumfang immer stärker gewichtet wird beim Schätzen des aktuellen Radumfangs (vgl. Kennlinie in Fig. 4). Bis zu einem Zeitpunkt 45 sinkt der geschätzte aktuelle Radumfang 14 deshalb ab und nähert sich schrittweise den (gemittelten) Radumfangseinzelwerten 13 an.

Zu dem Zeitpunkt 45 fährt das Fahrzeug beispielsweise in einen Tunnel ein, sodass das GNSS-Signal nicht mehr zur Verfügung steht, Datenpaare aus Referenzgeschwindigkeit und Raddrehzahl für ungültig bewertet werden und deshalb keine Radumfangseinzelwerte 13 mehr bereitgestellt werden können. Der aktuelle Radumfang 14 nähert sich deshalb wieder dem Rückfallradumfang 19 an, da eine Gesamtgüte des Ringspeichers mit jedem Zeitschritt sinkt (vgl. Fig. 4). Erst zu einem Zeitpunkt 46 hat das Fahrzeug den Tunnel wieder verlassen, sodass das GNSS-Signal wieder zur Verfügung steht. Die Datenpaare werden wieder als gültig bewertet und Radumfangseinzelwerte 13 werden wieder geschätzt. In der Folge nähert sich der geschätzte aktuelle Radumfang 14 wieder den (gemittelten) Radumfangeinzelwerten 13 im Ringspeicher an, bis das GNSS-Signal zu einem Zeitpunkt 47 erneut abreißt. Nach dem Zeitpunkt 47 nähert sich der geschätzte aktuelle Radumfang 14 schrittweise wieder dem Rückfallradumfang 19 an.

Dieses Annähern an die (gemittelten) Radumfangseinzelwerte 13 bzw. den Rückfallradumfang 19 entspricht einem Anlernen und Verlernen der (gemittelten) Radumfangseinzelwerte 13. Sofern die Referenzgeschwindigkeit nicht bereitgestellt werden kann, fällt der geschätzte aktuelle Radumfang 14 immer wieder zurück auf den Rückfallradumfang 19. Auf diese Weise kann stets eine zuverlässige Schätzung für den aktuellen Radumfang 14 vorgenommen werden.

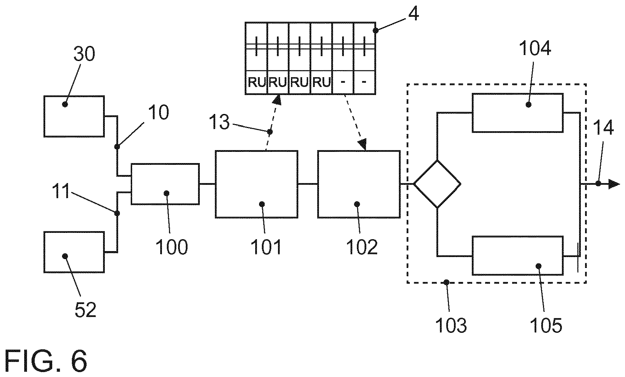

In Fig. 6 ist ein schematisches Signalflussdiagramm einer Ausführungsform des Verfahrens zum Schätzen eines aktuellen Radumfanges mindestens eines an einem Fahrzeug angeordneten Rades gezeigt. Ein GNSS als Referenzeinrichtung 30 stellt eine Referenzgeschwindigkeit 10 des Fahrzeugs bereit. Von einer Fahrdynamikregelung 52 des Fahrzeugs, beispielsweise einem ESC, wird eine Raddrehzahl 11 bereitgestellt. Im Verfahrensschritt 100 werden die Referenzgeschwindigkeit 10 und die Raddrehzahl 11 miteinander hinsichtlich ihrer Zeitbasis bzw. des zugehörigen Zeitpunktes synchronisiert, d.h. es werden Datenpaare bestehend aus einer Referenzgeschwindigkeit 10 und einer Raddrehzahl 11, welche sich beide auf denselben Zeitpunkt beziehen, erzeugt.

Anschließend werden die Datenpaare im Verfahrensschritt 101 auf ihre Gültigkeit hin überprüft. Als gültig werden die Datenpaare beispielsweise bewertet, wenn ein aus der Referenzgeschwindigkeit 10 und der Raddrehzahl 11 geschätzter Radumfangseinzelwert 13 innerhalb eines vorbestimmten Bereichs liegt (z.B. definiert durch den Maximalwert 43 und den Minimalwert 42 in der Fig. 5). Für die als gültig bewerteten Datenpaare wird der daraus berechnete Radumfangseinzelwert 13 in einen Ringspeicher 4 abgelegt. Es kann ferner vorgesehen sein, dass auch die jeweils zugehörige Referenzgeschwindigkeit 10 und die jeweils zugehörige Raddrehzahl 11 im Ringspeicher hinterlegt werden.

In Verfahrensschritt 102 wird eine Güte der in dem Ringspeicher 4 hinterlegten Radumfangseinzelwerte 13 berechnet. Dies erfolgt beispielsweise auf Grundlage eines Alters und/oder der zugehörigen Referenzgeschwindigkeit 10, beispielsweise über entsprechend ausgebildete Kennlinien (vgl. z.B. Figuren 2 und 3). Ferner wird eine Gesamtgüte des Ringspeichers auf Grundlage der Güten der einzelnen Radumfangseinzelwerte berechnet.

In Verfahrensschritt 103 wird je nachdem, ob entsprechende Radumfangseinzelwerte 13 zur Verfügung stehen bzw. ob diese als gültig bewertet wurden, und in Abhängigkeit der berechneten Gesamtgüte des Ringspeichers (vgl. Fig. 4) der aktuelle Radumfang 14 auf Grundlage der (gemittelten) Radumfangseinzelwerte 13 angelernt 104 oder verlernt 105 (vgl. auch Fig. 5).

Zum Schluss wird der geschätzte Radumfang 14 als Radumfangssignal ausgegeben und kann beispielsweise dazu verwendet werden, eine aktuelle Geschwindigkeit des Fahrzeugs zu schätzen.

**Bezugszeichenliste**

| | |
|---|---|
| 1 | Vorrichtung |
| 2 | Eingangseinrichtung |
| 3 | Berechnungseinrichtung |
| 4 | Ringspeicher |
| 5 | Ausgangseinrichtung |
| 10 | Referenzgeschwindigkeit |
| 11 | Raddrehzahl |
| 12 | Datenpaar |
| 13 | Radumfangseinzelwert |
| 14 | aktueller Radumfang |
| 15 | Radumfangssignal |
| 16 | aktuelle Geschwindigkeit |
| 17 | Güte |
| 18 | Gesamtgüte |
| 19 | Rückfallradumfang |
| 20 | x-Achse |
| 21 | y-Achse |
| 22 | Kurve |
| 24 | x-Achse |
| 25 | y-Achse |
| 26 | Kurve |
| 27 | x-Achse |
| 28 | y-Achse |
| 30 | Referenzeinrichtung |
| 40 | x-Achse |
| 41 | y-Achse |
| 42 | Minimalwert |
| 43 | Maximalwert |
| 44-47 | Zeitpunkt |
| 50 | Fahrzeug |
| 51 | Rad |
| 52 | Fahrdynamiksteuerung |
| 53 | Steuerung |
| 100-105 | Verfahrensschritte |

**Patentansprüche**

1. Verfahren zum Schätzen eines aktuellen Radumfanges (14) mindestens eines an einem Fahrzeug (50) angeordneten Rades (51), umfassend die folgenden Schritte:

    (a) Ermitteln einer Referenzgeschwindigkeit (10) des Fahrzeugs (50) zu einem Zeitpunkt (44-47) mittels einer Referenzeinrichtung (30),
    (b) Erfassen einer Raddrehzahl (11) des mindestens einen Rades (51) zu dem Zeitpunkt (44-47) mittels eines Raddrehzahlsensors,
    (c) Schätzen eines Radumfangseinzelwertes (13) auf Grundlage der ermittelten Referenzgeschwindigkeit (10) und der erfassten Raddrehzahl (11) für den Zeitpunkt (44-47) mittels einer Berechnungseinrichtung (3),
    (d) Ablegen zumindest des geschätzten Radumfangseinzelwertes (13) in einem Ringspeicher (4) für den Zeitpunkt (44-47),
    (e) Wiederholen der Schritte (a) bis (d) für mindestens einen weiteren Zeitpunkt (44-47),

    Schätzen eines aktuellen Radumfanges (14) auf Grundlage der im Ringspeicher (4) hinterlegten Radumfangseinzelwerte (13) mittels der Berechnungseinrichtung (3), Ausgeben des geschätzten aktuellen Radumfanges (14) als Radumfangssignal (15).

2. Verfahren nach Anspruch 1, **dadurch gekennzeichnet, dass** das Schätzen des aktuellen Radumfanges (14) auf Grundlage eines gewichteten Mittelwertes der im Ringspeicher (4) hinterlegten Radumfangseinzelwerte (13) erfolgt.

3. Verfahren nach Anspruch 1 oder 2, **dadurch gekennzeichnet, dass** jeweils eine Gültigkeit der Referenzgeschwindigkeit (10) und der Raddrehzahl (11) überprüft wird, wobei das Schätzen und Ablegen des Radumfangseinzelwertes (13) für einen Zeitpunkt (44-47) nur erfolgt, wenn die Referenzgeschwindigkeit (10) und die Raddrehzahl (11) für den Zeitpunkt (44-47) gültig sind.

4. Verfahren nach einem der vorangegangenen Ansprüche, **dadurch gekennzeichnet, dass** eine Güte (17) der im Ringspeicher (4) abgelegten Radumfangseinzelwerte (13) bestimmt wird.

5. Verfahren nach Anspruch 4, **dadurch gekennzeichnet, dass** die Güte (17) jeweils in Abhängigkeit eines Alters der Radumfangseinzelwerte (13) in dem Ringspeicher (4) bestimmt wird.

6. Verfahren nach Anspruch 4 oder 5, **dadurch gekennzeichnet, dass** die Güte (17) jeweils in Abhängigkeit der jeweils zu den Radumfangseinzelwerten (13) gehörenden ermittelten Referenzgeschwindigkeit (10) bestimmt wird.

7. Verfahren nach einem der vorangegangenen Ansprüche, **dadurch gekennzeichnet, dass** eine Gesamtgüte (18) des Ringspeichers (4) bestimmt wird, wobei das Schätzen des aktuellen Radumfangs (14) zusätzlich auf Grundlage der bestimmten Gesamtgüte (18) des Ringspeichers (4) erfolgt.

8. Verfahren nach Anspruch 7, **dadurch gekennzeichnet, dass** das Schätzen des aktuellen Radumfangs (14) auf Grundlage einer Kennlinie erfolgt, wobei die Kennlinie eine Gewichtung zwischen einem auf Grundlage der im Ringspeicher (4) hinterlegten Radumfangseinzelwerte (13) geschätzten Radumfang und einem Rückfallradumfang (19) in Abhängigkeit der Gesamtgüte (18) des Ringspeichers (4) definiert.

9. Verfahren nach einem der vorangegangenen Ansprüche, **dadurch gekennzeichnet, dass** zusätzlich die zugehörige ermittelte Referenzgeschwindigkeit (10) zu einem jeweiligen Zeitpunkt (44-47) in dem Ringspeicher (4) hinterlegt wird, wobei das Schätzen des aktuellen Radumfanges (14) ausschließlich auf Grundlage derjenigen Radumfangseinzelwerte (13) in dem Ringspeicher (4) erfolgt, deren zugehörige Referenzgeschwindigkeiten (10) mit einem Geschwindigkeitsbereich korrespondieren, in dem eine Geschwindigkeit (16) des Fahrzeugs (50) zu einem aktuellen Zeitpunkt (44-47) liegt.

10. Vorrichtung (1) zum Schätzen eines aktuellen Radumfanges (14) mindestens eines an einem Fahrzeug (50) angeordneten Rades (51), umfassend:

    eine Eingangseinrichtung (2),
    eine Berechnungseinrichtung (3), und
    eine Ausgangseinrichtung (5),

**dadurch gekennzeichnet, dass** die Vorrichtung (1) einen Ringspeicher (4) beinhaltet, und wobei die Eingangseinrichtung (2) dazu eingerichtet ist, eine Referenzgeschwindigkeit (10) des Fahrzeugs (50) zu mindestens einem Zeitpunkt (44-47) von einer Referenzeinrichtung (30) zu empfangen und eine Raddrehzahl (11) des mindestens einen Rades (51) zu dem mindestens einen Zeitpunkt (44-47) von einem Raddrehzahlsensor zu empfangen, und

wobei die Berechnungseinrichtung (3) dazu eingerichtet ist, einen Radumfangseinzelwert (13) auf Grundlage der empfangenen

Referenzgeschwindigkeit (10) und der empfangenen Raddrehzahl (11) für den mindestens einen Zeitpunkt (44-47) zu schätzen und zumindest den geschätzten Radumfangseinzelwert (13) in dem Ringspeicher (4) zu hinterlegen, und

wobei die Berechnungseinrichtung (3) ferner dazu eingerichtet ist, einen aktuellen Radumfang (14) auf Grundlage von im Ringspeicher (4) für mehrere Zeitpunkte (44-47) hinterlegten Radumfangseinzelwerten (13) zu schätzen, und

wobei die Ausgangseinrichtung (5) dazu eingerichtet ist, den geschätzten aktuellen Radumfang (14) als Radumfangssignal (15) auszugeben.

**Claims**

1. Method for estimating a current wheel circumference (14) of at least one wheel (51) which is arranged on a vehicle (50), comprising the following steps:

   (a) determining a reference speed (10) of the vehicle (50) at a point in time (44-47) by means of a reference device (30),
   (b) sensing a wheel speed (11) of the at least one wheel (51) at the point in time (44-47) by means of a wheel speed sensor,
   (c) estimating an individual wheel circumference value (13) on the basis of the determined reference speed (10) and the sensed wheel speed (11) for the point in time (44-47) by means of a calculation apparatus (3),
   (d) storing at least the estimated individual wheel circumference value (13) in a ring memory (4) for the point in time (44-47),
   (e) repeating steps (a) to (d) for at least one further point in time (44-47),

   estimating a current wheel circumference (14) on the basis of the individual wheel circumference values (13), stored in the ring memory (4), by means of the calculation apparatus (3), and

   outputting the estimated current wheel circumference (14) as a wheel circumference signal (15) .

2. Method according to Claim 1, **characterized in that** the current wheel circumference (14) is estimated on the basis of a weighted mean value of the individual wheel circumference values (13) stored in the ring memory (4).

3. Method according to Claim 1 or 2, **characterized in that** in each case a validity of the reference speed (10) and of the wheel speed (11) is checked, wherein the estimation and storage of the individual wheel circumference value (13) are carried out for a point in time (44-47) only if the reference speed (10) and the wheel speed (11) are valid for the point in time (44-47).

4. Method according to one of the preceding claims, **characterized in that** a quality (17) of the individual wheel circumference values (13) stored in the ring memory (4) is determined.

5. Method according to Claim 4, **characterized in that** the quality (17) is determined in each case in accordance with an age of the individual wheel circumference values (13) in the ring memory (4).

6. Method according to Claim 4 or 5, **characterized in that** the quality (17) is determined in each case in accordance with the determined reference speed (10) which is respectively associated with the individual wheel circumference values (13).

7. Method according to one of the preceding claims, **characterized in that** a total quality level (18) of the ring memory (4) is determined, wherein the current wheel circumference (14) is additionally estimated on the basis of the determined total quality level (18) of the ring memory (4).

8. Method according to Claim 7, **characterized in that** the current wheel circumference (14) is estimated on the basis of a characteristic curve, wherein the characteristic curve defines a weighting between a wheel circumference which is estimated on the basis of the individual wheel circumference values (13) stored in the ring memory (4) and a fallback wheel circumference (19) in accordance with the total quality level (18) of the ring memory (4).

9. Method according to one of the preceding claims, **characterized in that** in addition the associated determined reference speed (10) is stored at a respective point in time (44-47) in the ring memory (4), wherein the current wheel circumference (14) is stored in the ring memory (4) exclusively on the basis of those individual wheel circumference values (13) whose associated reference speeds (10) correspond to a speed range in which a speed (16) of the vehicle (50) occurs at a current point in time (44-47).

10. Device (1) for estimating a current wheel circumference (14) of at least one wheel (51) which is arranged on a vehicle (50), comprising:

> an input apparatus (2),
> a calculation apparatus (3),
> and
> an output apparatus (5),
> **characterized in that** the device (1) contains a ring memory (4), and wherein the input apparatus (2) is configured to receive a reference speed (10) of the vehicle (50) from a reference apparatus (30) at at least one point in time (44-47) and to receive a wheel speed (11) of the at least one wheel (51) from a wheel speed sensor at the at least one point in time (44-47), and
> wherein the calculation apparatus (3) is configured to estimate an individual wheel circumference value (13) on the basis of the received reference speed (10) and the received wheel speed (11) for the at least one point in time (44-47) and to store at least the estimated individual wheel circumference value (13) in the ring memory (4), and wherein the calculation apparatus (3) is also configured to estimate a current wheel circumference (14) on the basis of individual wheel circumference values (13) stored for a plurality of points in time (44-47) in the ring memory (4), and wherein the output apparatus (5) is configured to output the estimated current wheel circumference (14) as a wheel circumference signal (15).

**Revendications**

1. Procédé d'estimation d'une circonférence de roue actuelle (14) d'au moins une roue (51) disposée sur un véhicule (50), le procédé comprenant les étapes suivantes :

> (a) déterminer une vitesse de référence (10) du véhicule (50) à un instant (44-47) à l'aide d'un moyen de référence (30),
> (b) détecter une vitesse de roue (11) de l'au moins une roue (51) à l'instant (44-47) à l'aide d'un capteur de vitesse de rotation de roue,
> (c) estimer une valeur de circonférence de roue individuelle (13) sur la base de la vitesse de référence déterminée (10) et de la vitesse de rotation de roue détectée (11) à l'instant (44-47) à l'aide d'un moyen de calcul (3),
> (d) stocker au moins la valeur de circonférence de roue individuelle estimée (13) dans une mémoire circulaire (4) pour l'instant (44-47),
> (e) répéter les étapes (a) à (d) pour au moins un autre instant (44-47),
>
> estimer une circonférence de roue actuelle (14) sur la base des valeurs de circonférence de roue individuelles (13) stockées dans la mémoire circulaire (4) à l'aide du moyen de calcul (3),
> délivrer en sortie la circonférence de roue actuelle estimée (14) comme signal de circonférence de roue (15).

2. Procédé selon la revendication 1, **caractérisé en ce que** l'estimation de la circonférence de roue actuelle (14) est effectuée sur la base d'une valeur moyenne pondérée des valeurs de circonférence de roue individuelles (13) stockées dans la mémoire circulaire (4).

3. Procédé selon la revendication 1 ou 2, **caractérisé en ce que** la validité de la vitesse de référence (10) et de la vitesse de rotation de roue (11) est vérifiée à chaque fois, l'estimation et le stockage de la valeur de circonférence de roue individuelle (13) pour un instant (44-47) n'étant effectuée que si la vitesse de référence (10) et la vitesse de rotation de roue (11) sont valables pour l'instant (44-47).

**4.** Procédé selon l'une des revendications précédentes, **caractérisé en ce qu'**une qualité (17) des valeurs de circonférence de roue individuelles (13) stockées dans la mémoire circulaire (4) est déterminée.

**5.** Procédé selon la revendication 4, **caractérisé en ce que** la qualité (17) est déterminée à chaque fois en fonction d'un âge des valeurs de circonférence de roue individuelles (13) dans la mémoire circulaire (4).

**6.** Procédé selon la revendication 4 ou 5, **caractérisé en ce que** la qualité (17) est déterminée à chaque fois en fonction de la vitesse de référence déterminée (10) appartenant respectivement aux valeurs de circonférence de roue individuelles (13).

**7.** Procédé selon l'une des revendications précédentes, **caractérisé en ce qu'**une qualité globale (18) de la mémoire circulaire (4) est déterminée, l'estimation de la circonférence de roue actuelle (14) étant effectuée en outre sur la base de la qualité globale déterminée (18) de la mémoire circulaire (4).

**8.** Procédé selon la revendication 7, **caractérisé en ce que** la circonférence de roue actuelle (14) est estimée à partir d'une courbe caractéristique, la courbe caractéristique définissant une pondération entre une circonférence de roue, évaluée sur la base des valeurs de circonférence de roue individuelles (13) stockées dans la mémoire circulaire (4), et une circonférence de roue de retour (19) en fonction de la qualité globale (18) de la mémoire circulaire (4).

**9.** Procédé selon l'une des revendications précédentes, **caractérisé en ce que** la vitesse de référence déterminée associée (10) est en outre stockée dans la mémoire circulaire (4) à un instant respectif (44-47), l'évaluation de la circonférence de roue actuelle (14) étant effectuée exclusivement sur la base des valeurs de circonférence de roue individuelles (13) dans la mémoire circulaire (4) dont les vitesses de référence associées (10) correspondent à une plage de vitesses dans laquelle une vitesse (16) du véhicule (50) est située à un instant actuel (44-47).

**10.** Dispositif (1) d'estimation d'une circonférence de roue actuelle (14) d'au moins une roue (51) disposée sur un véhicule (50), le dispositif comprenant :

un moyen d'entrée (2),
un moyen de calcul (3), et
un moyen de sortie (5),
**caractérisé en ce que** le dispositif (1) contient une mémoire circulaire (4), et le moyen d'entrée (2) est conçu pour recevoir une vitesse de référence (10) du véhicule (50) au moins à un instant (44-47) d'un moyen de référence (30) et pour recevoir une vitesse de rotation de roue (11) de l'au moins une roue (51) d'un capteur de vitesse de roue à l'au moins un instant (44-47), et
le moyen de calcul (3) étant conçu pour estimer une valeur de circonférence de roue individuelle (13) sur la base de la vitesse de référence reçue (10) et de la vitesse de rotation de roue reçue (11) pour l'au moins un instant (44-47) et pour stocker au moins la valeur de circonférence de roue individuelle estimée (13) dans la mémoire circulaire (4), et
le dispositif de calcul (3) étant en outre conçu pour estimer une circonférence de roue actuelle (14) sur la base de valeurs de circonférence de roue individuelles (13) stockées dans la mémoire circulaire (4) pour une pluralité d'instants (44-47), et
le moyen de sortie (5) étant conçu pour délivrer en sortie la circonférence de roue actuelle estimée (14) comme signal de circonférence de roue (15).

| $t_{i-(n-1)}$ | ... | $t_{i-2}$ | $t_{i-1}$ | $t_i$ | $t_{i+1}$ |
|---|---|---|---|---|---|
| $v_{i-(n-1)}$ | ... | $v_{i-2}$ | $v_{i-1}$ | $v_i$ | $v_{i+1}$ |
| $r_{i-(n-1)}$ | ... | $r_{i-2}$ | $r_{i-1}$ | $r_i$ | $r_{i+1}$ |
| $G_{i-(n-1)}$ | ... | $G_{i-2}$ | $G_{i-1}$ | $G_i$ | $G_{i+1}$ |
| $RU_{i-(n-1)}$ | ... | $RU_{i-1}$ | $RU_{i-1}$ | $RU_i$ | $RU_{i+1}$ |

FIG. 1

FIG. 2

FIG. 3

FIG. 4

FIG. 5

FIG. 6

**EP 3 597 452 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006058567 A1